# EUROPEAN PATENT SPECIFICATION

(11) **EP 2 961 282 B1**
(45) Date of publication and mention of the grant of the patent: **08.03.2017**
(21) Application number: 14706644.3
(22) Date of filing: 26.02.2014
(51) Int. Cl.: A23C 9/123, A23C 9/12

(54) **PROCESS OF MAKING A FERMENTED DAIRY PRODUCT**
VERFAHREN ZUR HERSTELLUNG EINES FERMENTIERTEN MILCHPRODUKTES
PROCÉDÉ DE PRÉPARATION D'UN PRODUIT LAITIER FERMENTÉ

(30) Priority: 27.02.2013 WO PCT/EP2013/053922
(43) Date of publication of application: 06.01.2016
(73) Proprietor: Danone GmbH, 85540 Haar (DE)
(72) Inventor: GAIGL, Birgit, 85669 Pastetten (DE); MAYER, Josef, 83026 Rosenheim (DE); RECHENAUER, Thomas, 83064 Raubling (DE)
(74) Representative: Cabinet Plasseraud
(86) International application number: PCT/EP2014/053752
(87) International publication number: WO 2014/131805

(56) References cited:
- EP-A1- 0 359 300
- WO-A1-2011/078107
- FR-A1- 2 112 160
- GB-A- 2 207 849
- GB-A- 2 252 228
- JP-A- 2010 148 473
- RASIC J LJ: "YOGURT AND YOGURT CHEESE MANUFACTURE", CULTURED DAIRY PRODUCTS JOURNAL, XX, XX, vol. 22, no. 4, 1 January 1987 (1987-01-01), pages 6-08, XP000671878,

## Description

The invention concerns a process of making a fermented dairy product. The process can be performed with simple compact equipments settings, with allowing a consistent quality production.

Fermented dairy products such as yogurts are known. At industrial scale they are typically produced by processes involving standardization of milk, pasteurization, homogenization and fermentation. Processes involving a partial whey removal after fermentation have also been described. Such processes allow obtaining richer products.

Document *http:*//*www.strategie-aims.com*/*events*/*conferences*/*6-xviieme-conference-de-*/*-aims*/*communications*/*1512-repondre-aux-defis-du-developpement-durable-par-linnovation-strategique-une-etude-de-cas*/*download* discloses on page 13, that in yogurts preparation processes, pasteurization and fermentation can be performed in a single tank to minimize investments. There is however a need for improved processes that can lead to richer products, with a good production consistency.

Document CA2183334 describes a process of making yogurt wherein some whey is removed in a second vessel different from a first fermentation vessel. The whey is removed by passing through a sieve disposed at the bottom of the second vessel. However such processes and equipments are not convenient for compact installations.

Document EP359300 describes processes and equipments for making yogurts in a movable production unit. There is however a need for different compact processes allowing obtaining different products, especially richer products, for example with a creamy texture, that are appreciated by consumers and/or perceived as corresponding to artisanal products.

There is a need for processes and products that can be implemented close to farm sites and then distributed for example locally. Such processes and products are useful in reducing transportation and/or offering products that are perceived as natural, authentic, and/or regional.

The invention addresses at least one of the problems and/or needs mentioned above with a process of making a fermented dairy product comprising the following steps:
a) providing milk having a fat content of a least 1% by weight, preferably at least 3% by weight,
b) heating the milk at a temperature of from 80 °C to 99°C, preferably from 85 °C to 95°C,
c) cooling the milk to a temperature of from 30 °C to 45 °C,
d) inoculating the milk with a starter comprising lactic acid bacteria,
e) allowing a fermentation at a temperature of from 30 °C to 45 °C, with a pH decrease to a breaking pH at which proteins coagulate to form a curd,
f) breaking and dividing the curd,
g) allowing separation of whey from the curd, and partially removing the whey to obtain a concentrated white mass,
h) mixing the white mass,
i) smoothing the white mass, and
j) conditioning and cooling to a temperature of from 1 °C to 10°C,
wherein steps a), b), c), d), e), f), g) and h) are performed in a same single tank.

It has been found that the process allows a surprisingly good dispersion of fat in the white mass which has a rich texture, with a substantially high viscosity. It has been thus found that the process surprisingly allows a consistent production of products, with a consistent fat concentration of the packaged products after conditioning: the packaged products comprising the white mass from the bottom of the tank have substantially the fat concentration as the packaged products comprising the white mass from the top of the tank. It has been surprisingly found that there is no consistency of production issues due to formation of fat layer on the top of the tank during fermentation.

It is mentioned that the white mass preferably has a viscosity of from 1000 to 3500 mPa.s, for example from 1200 to 3500 mPa.s, preferably from 1500 to 3000 mPa.s, for example from 1000 to 1200 mPa.s, or from 1200 to 1500 mPa.s, or from 1500 to 1750 mPa.s or from 1750 to 2000 mPa.s., or from 2000 mPa.s to 2250 mPa.s, or from 2250 to 2500 mPas.s, or from 2500 to 2750 mPa.s, or from 2750 to 3000 mPa.s. Such viscosities are considered as being substantially high viscosities. Products with such viscosities are considered as having a rich texture.

### Definitions

In the present specification the viscosity refers to the viscosity as measured at 10°C, at a shear rate of 64 s⁻¹, preferably after 10 s at this shear rate, preferably with a rheometer with 2 co-axial cylinders, for example with a Mettler® RM 180 or 200.

In the present application "raw milk" refers to milk that has substantially not undergone any treatment such as skimming treatments or homogenizing.

In the present application "ultra-fresh milk" refers to milk that has not been stored for a long time between animal milking and use. Ultra-fresh milk has typically a storage time of less than 24 h.

In the present application "warm milk" refers to milk at cow's temperature or at most at up to 10°C below cow's temperature. Warm milk is typically milk that has been stored without cooling, during a time and at an external temperature that does not allow a temperature drop of more than 10 °C. Warm milk can be typically at a temperature of from 35 °C-39 °C. The storage time is typically the time needed to milk all the cows to provide enough milk to fill the tank, for example up to 5 or 10 hours.

In the present application "pre-pasteurized milk" refers to a milk that has been subjected to a heating pre-treatment, typically at a temperature of form 65 °C to lower than 80 °C, for example 70-75 °C, for example during 20 seconds.

In the present application "breaking and dividing the curd" refers to an action of moving a blade in a product, preferably an agitator blade, preferably in a rotation motion, preferably in one or a few rotation(s), such that two solid or viscous parts of said product can be distinguished, preferably after a time of at least 1 second, preferably at least 5 seconds, preferably at least 1 minute, for example after at least 1 hour. It is not excluded that said parts rejoins after some time if they are viscous. If rejoining, and upon rejoining a rejoining front can be observed for some time. Breaking and dividing can be performed with blades of an agitator moving a low speed, and/or a grid. The breaking and dividing allows draining the whey.

In the present application "agitating" or "mixing" refers to an action of moving an object in a liquid or viscous product (and/or moving such a product through an object), wherein the product and/or the shearing energy is/are such that one cannot distinguish two parts, typically after a time of at most 1 second. Agitation can be performed with an agitator comprising blades, moving at high speed.

In the present application "smoothing" refers to an action of destroying small proteins particles, typically by forcing the white mass through a static filter or wire screen, or through a dynamic system, at high shear rate.

Except the conditioning step and the smoothing step, all steps of the process are performed in a same single tank. Accordingly the products obtained at the end of the steps performed in the same tank are not transferred from one equipment to another equipment, for example from a heat exchanger to a fermentation tank, or from a fermentation tank to separation equipment. This provides very compact and cost effective installations that can fit a transportation container for example. Also this provides simple processes that can be easily handled by operators, for example by farmers.

The tank can be for example a 200 L to 70000 L tank, for example a 200 L to 10000 L 2000 L tank, or a 10000 L to 20000 L tank, or a 20000 L to 40000 L tank, or a 40000 L to 70000 L tank, preferably a 500 L to 1500 L tank. The tank is typically equipped with heat exchanging means, for example with a double jacket allowing transport of heating or cooling fluids. One can use tanks that are appropriate for fermentations. Examples of suitable tanks include cylinder tanks with a V-shaped bottom.

The tank is typically equipped with inlet and outlet means. Typically at least one outlet is place at the bottom of the tank. The tank is preferably provided with a big opening to allow an easy cleaning and/or maintenance. In a preferred embodiment the tank is equipped with an air filter allowing compensating depression(s) that might be generating during processing. It is preferred that at least steps b) and c) be performed with vacuum compensation, for example via an air filter. It has been surprisingly found that this allows a more efficient whey removal in subsequent steps.

It is mentioned that the tank can be provided with monitoring means such as probes, for example temperature probes and/or pH probes.

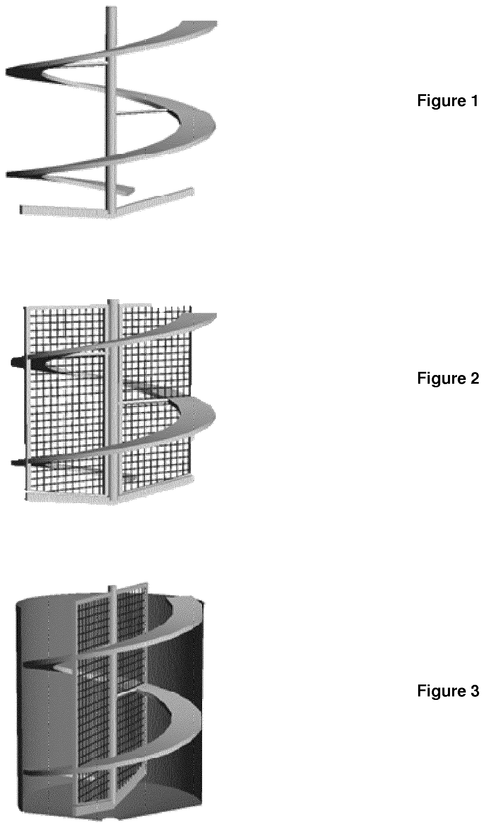

The tank is equipped with breaking and dividing means for example blades of an agitator and/or grid. The tank is preferably equipped with agitating means, for example with an agitator. It is mentioned that in a preferred embodiment, agitation, typically in steps b), c) and h), and breaking and dividing in step f) are performed with a same single agitator, optionally further provided with a grid. The agitator is typically in rotation motion, moving at various rotational speeds at various steps. The various speeds can provide agitation of liquids (at low viscosity, high speed), or breaking and dividing of the curd (at mid viscosity, low speed). Various kinds of agitators can be used. The agitator is preferably such that it provides an axial flow from top to bottom for agitating and/or mixing and some radial flow for breaking and dividing. The agitator can be for example a helix form agitator, comprising a rotation axis corresponding to the axis a cylinder tank, and radial helix blades extending in the direction of the tank walls, preferably almost reaching to the walls. Figure 1 represents an example of agitator design. The agitator can be an alpha-helix agitator. In one embodiment the agitator is a paddle agitator comprising a rotation axis corresponding to the axis a cylinder tank, and radial T-shape blades extending in the direction of the tank walls, preferably with the T heads almost reaching to the walls. Such an agitator can for present several groups of opposite T blades with different inclinations, for example 2 groups of opposite T blades (for a total of 4 T blades).

In a preferred embodiment the process is carried out with equipments fitted in a transportation container. The transportation container has typically of volume of from 60 to 120 m³.

In a preferred embodiment the transportation container has a production room comprising the tank and conditioning equipments, and optionally a cold storage room. The production room is preferably under a slight overpressure, and is preferably equipment with an air filtering system. This improves food safety. The cold storage room is preferably maintained at a temperature of between +1 °C and 10 °C.

The production facility, preferably a transportation container, is typically provided with simple and easily available utilities, such as water and electricity.

The transportation container can be moved by a trailer, from one farm to another farm and/or to a maintenance facility. A container equipped to carry out the process is typically expected to stay on a farm site several days, preferably several weeks.

The process can be easily handled and monitored by a farmer.

### Step a)

In step a) milk is provided in the tank. The milk has a fat content of a least 1% by weight, preferably at least 3%, preferably at least 3.5%, for example from 3.5% to 5%, preferably from 3.7% to 4.5%. The milk can have for example a protein content of from 3.0% to 4.5%, preferably from 3.5-4.0%, and a carbohydrate content of from 3.5% to 6%, preferably from 4.0-5.0%.

The milk is typically cow's milk. It is mentioned that the milk used is typically milk substantially directly obtained from the animal, typically cow, without treatments such as concentration, dilution, separations, re-constitution from milk fractions. In a preferred embodiment the milk is not subjected to a standardization step allowing meeting precise contents. This allows products to be quite natural and/or perceived as such. This also simplifies the process.

In a preferred embodiment the milk is substantially free of any further additive, that can be added to the milk at various stage of the process, such as cream, thickeners, sugar, sweeteners, enzymes, milk powder or concentrate, starch, or milk protein, whey protein. In a preferred embodiment, the only ingredients used are milk and starters.

In one embodiment the milk is raw milk. Raw milk contributes to providing pureness, simplicity and/or regionality. Moreover it allows using only two ingredients, milk and a starter, thus allowing a very simple process. In one embodiment the milk is ultra-fresh milk. Ultra-fresh milk contributes to providing pureness, simplicity and/or rationality. In one embodiment the milk is warm milk. It allows reducing the energy needed for heating in a subsequent step. In one embodiment the milk is pre-pasteurized milk. It allows using milk sources that might be easily available on some industrial production sites.

The provision of the milk in the tank can be performed by any appropriate introduction mean, for example via an inlet pipe fitted to the tank. Such means are known by the one skilled in the art.

It is mentioned that the milk can be transferred from a storage container into the tank.

### Step b)

In step b) the milk is heated at a temperature of from 80°C to 99°C, preferably from 85 °C to 95 °C. This is typically a pasteurization step, allowing eliminating parasite microorganisms. The temperature is typically held during 5 to 15 minutes, preferably 5 to 10 minutes. Heating is typically performed by introducing a hot fluid in a double jacket of the tank, preferably steam or optionally pressurized hot water, for example 110 °C to 150 °C pressurized hot water. The time needed to heat the milk from initial temperature, typically from 5 °C to 40 °C, to final temperature is usually a function of the temperature of the fluid, of the quantity of milk and of the geometry of the tank. It can be for example of from 30 minutes to 2 hours. The milk is typically agitated during heating and holding, to ensure heat diffusion. Such steps are known by the one skilled in the art.

It is mentioned that the process does not comprise a homogenizing step before and/or after the heating step. It is mentioned that the process does not comprise any homogenizing step at all.

### Step c)

In step c) the milk is cooled down to a temperature adapted for fermentation. The temperature is of from 30° to 45°C. Cooling is typically performed by introducing a fluid in a double jacket of the tank, preferably air or water, for example at room temperature. The time needed to cool the milk from heating temperature, to final cooling temperature is usually a function of the temperature of the fluid, of the quantity of milk and of the geometry of the tank. It can be for example of from 15 minutes to 1.5 hours. The milk is typically agitated during cooling, to ensure cooling diffusion. Such steps are known by the one skilled in the art.

### Step d)

In step d) the milk is inoculated with a starter comprising lactic acid bacteria. Such an operation is known by the one skilled in the art. Appropriate lactic acid bacteria are known by the one skilled in the art. It is mentioned that lactic acid bacteria are often referred to as ferments or cultures or starters. Examples of lactic acid bacteria that can be used include:
- Lactobacilli, for example Lactobacillus acidophilus, Lactobacillus casei, Lactobacillus plantarum, Lactobacillus reuteri, Lactobacillus johnsonii, Lactobacillus helveticus, Lactobacillus brevis, Lactobacillus rhamnosus, Lactobacillus delbrueckii,
- Streptococci, for example Streptococcus thermophilus, Streptococcus salivarius,
- Bifidobacteria, for example Bifidobacterium bifidum, Bifidobacterium longum, Bifidobacterium breve, Bifidobacterium animalis,
- Lactococci, for example Lactococcus lactis,
- mixtures or associations thereof.

The lactic acid bacteria preferably comprise, preferably consist of, Lactobacillus delbrueckii subsp. bulgaricus and Streptococcus salivarius subsp. thermophilus bacteria. The lactic acid bacteria used in the invention typically comprise an association of Streptococcus thermophilus and Lactobacillus delbrueckii subsp. bulgaricus. This association is known and often referred to as a yogurt symbiosis.

In some particular embodiments the lactic acid bacteria might comprise probiotic bacteria. Probiotic bacteria are known by the one skilled in the art. Examples of probiotic bacteria include some Bifidobacteria and Lactobacilli, such as Bifidobacterium brevis, Bifidobacterium animalis, Bifidobacterium animalis lactis, Bifidobacterium infantis, Bifidobacterium longum, Lactobacillus helveticus, Lactobacillus casei, Lactobacillus casei paracasei, Lactobacillus acidophilus, Lactobacillus rhamnosus, Lactobacillus plantarum, Lactobacillus reuteri, Lactobacillus delbrueckii subsp bulgaricus, Lactobacillus delbrueckii subsp lactis, Lactobacillus delbrueckii subsp delbrueckii, Lactobacillus brevis and Lactobacillus fermentum.

In a preferred embodiment one uses lactic acid bacteria that stop or reduce fermentation at a target pH that can be for example for from 4.0 to 4.4. For example one can use Yoflex® mild, marketed by CHR Hansen, that stops fermentation at pH 4.2 to 4.3.

The starter can be introduced in any appropriate form, for example in a spray-dried form or in a frozen form.

### Step e)

Step e) is a fermentation step. Such steps are known by the one skilled in the art. In such steps, the lactic acid bacteria produce lactic acid and thus cause a pH decrease. With the pH decreasing proteins coagulate to form a curd, typically at a breaking pH.

In step e) one allows fermentation at a temperature of from 30 °C to 45 °C, with a pH decrease to a breaking pH at which proteins coagulate to form a curd.

It is preferred that no agitation be performed at step e). During fermentation the milk is typically left without agitation. The fermentation time can be typically of from 4 to 8 hours, depending on the starter, the temperature and geometry of the tank.

The breaking pH is preferably of from 3.5 to 5.5, preferably of from 4.0 to 5.0, preferably from higher than 4.5 to 5.0, for example from 4.6 to 4.9. Fermentation is typically stopped, or at least lowered, at the desired pH by selecting starters therefore, as mentioned above, and/or by breaking and dividing the formed curd.

It is mentioned that during step e) a fat layer is formed at the top. This is also referred to as creaming, and this is typically due to the fact that large size fat globules move up following Stokes function. This phenomenon is much enhanced by lack of a homogenization step.

### Step f)

In step f) the curd is broken and divided. This step is preferably performed by a slight motion of an agitator, for example an agitator as described above. For example an agitator can be put in motion for 1 or 2 or 3 rotation(s), preferably at a gentle speed. In a preferred embodiment the agitator is provided with a group of cutting wires for example arranged in a grid, for example a wire screen, allowing some further division of the white mass. Preferably a vertical frame provided with cutting wired, for example arranged in a grid is assembled with a rotation agitator having radial blade, preferably in a helix form or in a T-shape form. In one embodiment the wires are arranged as a grid. In another embodiment the frame has a distinct part provided with vertical wires and a distinct part provided with horizontal wires. The frame is preferably disposed according to a plan comprising the rotation axis. The grid is preferably disposed according to a plan comprising the rotation axis. The invention also concerns such an assembly. Figure 2, represents an example of a grid, assembled to an agitator. Figure 3 represents an assembly of an agitator and a grid in a tank. The implementation of such a grid allows accelerating separation and removal of the whey.

The dividing increases the curd surface and thus facilitates liberation if whey from agglomerated proteins forming the curd. The implementation of the grid further accelerates these.

### Step g)

In step g) the whey is separated from the curd, and partially removed, to obtain a concentrated white mass. It is also referred to a strained white mass. No agitation is performed at step g). In a preferred embodiment step g) comprises allowing the whey to drain out of the curd, and filtering the whey off the curd. The drainage of the whey from the curd is typically progressive. A drainage time of from 2 to 15 hours, preferably from 4 to 8 hours, is for example appropriate. It is preferred that that temperature be of from 30 °C to 45 °C for step g). In one embodiment the temperature is left to slowly decrease to a temperature of 30 °C or higher.

Filtering is typically performed by allowing the whey to pass through a filter, while the white mass is retained in the tank. For example a filter connected to the tank can be used for that purpose. The filter is typically designed to allow retention of the white mass in the tank. It is mentioned that some overpressure, for example of from 0.2 to 2 bars, can be applied to help evacuating the whey.

The filtering can be for example performed by:
- passing the whey through a filter positioned at the bottom of the tank, by gravitation and/or by applying pressure, or
- passing the whey through a filter positioned at a side outlet of the tank, by applying pressure, or
- passing the whey though a filter moving downwardly.

Filters can typically have mesh openings of from 0.1 to 0.5 mm.

If filtering is performed by passing the whey through a filter positioned at the bottom of the tank, by gravitation and/or by applying pressure, the following can be for example implemented:
- the filter is positioned at an outlet at the bottom of the tank, or
- the filter is positioned in the tank, fitting with the bottom of the tank.

In one embodiment, one uses a dead-end tubular filter, allowing liquid to be filtered in a radial direction, preferably through a wire screen and a wide screen.

In a preferred embodiment about 10% to 30% of whey is removed, compared to the weight of milk provided in step a). Such removal rates are believed to constitute an optimal for obtaining a significantly rich texture, while having an efficient process.

### Step h)

In step h) the white mass is mixed. This mixing step involves agitation. This is typically done by stirring/mixing/agitating the white mass in the tank, typically with an agitator as described above, providing an axial flow from top to bottom, for example an helix agitator. This allows homogeneous products with a good inclusion of fat globules in the product. The temperature can be left to slowly decrease to a temperature of 30 °C or higher.

It has been surprisingly found that it was possible include and disperse the fat layer on top of tank in the viscous rich white mass. It was surprisingly found that this was possible without a very significantly loss of viscosity, thus allowing final products to have a rich texture with fat concentrations consistency.

### Step i)

In step i) the white mass is removed from the tank, and smoothed. Smoothing typically leads to some viscosity drop. The shear provided during smoothing generated a plain but rich texture with a minimum of grains. Such smoothing steps generating plain but rich textures and minimum grain, are known by the one skilled in the art.

### Step j)

In step j) the product is conditioned in a packaging container and cooled down to a storage temperature of from 1 °C to 10 °C. It is mentioned that conditioning can be performed at a temperature of from 30 °C to 45 °C, and that cooling can be subsequent to conditioning. Conditioning can be also referred to as packaging.

Conditioning can be performed by conventional techniques involving pouring the product in the packaging containers, and then sealing the packaging container. One can for example use a round filler. Sealing can be performed for example with a cap or with a lid. The container can be for example a container of 50 ml (or 50 g), to 1 L (or 1 kg), for example a container of 50 ml (or 50 g) to 80 ml (or 80 g), or 80 ml (or 80 g) to 100 ml (or 100g), or 100 ml (or 100 g) to 125 ml (or 125 g), or 125 ml (or 125 g) to 150 ml (or 150 g), or 150 ml (or 150 g) to 200 ml (or 200 g), or 250 ml (or 250 g) to 300 ml (or 300 g), or 300 ml (or 300 g) to 500 ml (or 500 g), or 500 ml (or 500 g) to 750 ml (or 750 g), or 750 ml (or 750 g) to 1 L (or 1 kg).

In compact installation, the containers are preferably preformed containers, preferably preformed cups. The containers are preferably thermoformed containers, preferably thermoformed cups.

The product can be stored, transported and/or distributed at a chilled temperature of 1 °C to 10 °C, preferably of 4 °C to 10 °C.

Further details or advantages of the invention might appear in the following non limitative examples.

### Examples

### Example 1

One prepares products with using the ingredients, equipments and procedure described below. The products are tested as reported below.

### Ingredients:

- Raw milk: Cow's raw milk with a fat content of 3.7-4.5%, a protein content of 3.5-4.0%, and a carbohydrate content of 4.0-5.0%.
- Culture: Yoflex® mild, marketed by CHR Hansen.

### Equipments:

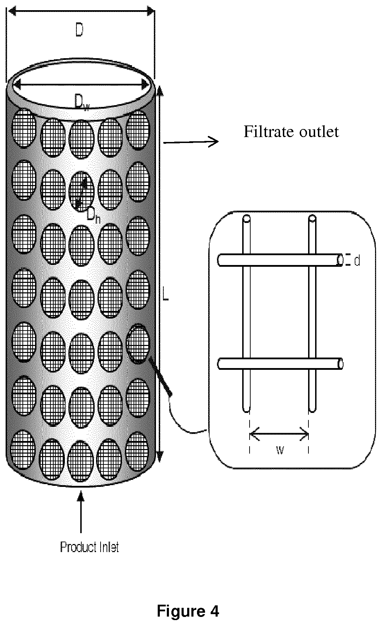

- Reactor/Tank: Double wall jacket reactor of 250 L capacity (45 L in double wall), equipped with a drainage filter that can be connected to the bottom of the reactor, a sterile air filter and with a helix agitator as illustrated on Figure 1.
- Helix agitator: RO type 1 agitator, supplier Stelzer.
- Drainage filter: dead-end tubular filter, supplier Kieselman. The filter allows liquid to be filtered in a radial direction, through a wire screen and a wide screen. Figure 4 represents the drainage filter, with an enlarged view of the wire screen. The filter characteristics are the following:
   - Effective filter length: 35.000 cm
   - Wide Screen:
      - Inner diameter D: 3.500 cm
      - Hole diameter Dₕ: 0.200 cm
      - Hole density: 18.000 holes/cm²
      - Area: 385 cm²
      - Void fraction: 56.5%
      - Hole surface : 0.031 cm²
      - Hydraulic diameter: 0.200 cm
      - Non-circularity coefficient: 1.000
   Wire Screen
   - Inner diameter D_{w}: 3.495 cm
   - wire thickness d: 0.029 cm
   - wire hole size w: 0.025 cm
   - Area: 384.295 cm²
   - Void fraction: 21.4%
   - Hole surface: 6.25.10⁻⁰⁴ cm²
   - Hydraulic diameter: 0.025 cm
   - Non-circularity coefficient: 0.890
   - Total void fraction: 12.1%
   - Crossing section: 46.58 cm²

### Procedure:

### Step 1 - Transfer

Transferring 250 L of milk into the reactor

### Step 2 - heating

Closing the tank outlet and using the sterile air filter to avoid a vacuum formation Starting agitator at 92rpm
Starting heating by opening steam connection to double wall jacket:
- Steam at 135-140 °C, 3.5 bars
- Heating time 60 min
- Product Temperature reached 90-95 °C

### Step 3 - Holding temperature

Stopping heating by closing steam and disconnecting
Heat holding time: 8 min
Agitator still running at 92 rpm

### Step 4 - Cooling to fermentation temperature

Connecting cool water flow direction from bottom to top of double wall jacket, and opening cold water connection
- cold water at 10 °C
- Cooling time 30 min
- Product temperature reached Cooling temperature 37-39 °C
- Agitator is still running at 92 rpm

### Step 5 - Inoculation

Draining cold water out of double wall jacket and disconnecting cold water tube Inoculating with 40 mL of culture
Mixing culture with agitator at 92 rpm during 10 minutes
Blocking the agitator and starting fermentation at 37 °C

### Step 6 - Fermentation

Allowing fermentation:
- breaking pH reached 4.6
- fermentation time 6h
- temperature at end of fermentation: 35 °C

### Step 7 - Breaking and dividing

Stopping fermentation and dividing the curd by 1 rotation of agitator at 15 rpm

### Step 8 - Whey removal

Blocking agitator
Installing the drainage filter at bottom of tank
Opening bottom outlet of tank and draining the whey though the filter
- drainage pressure: only gravitation
- drainage amount ( based on initial milk weight): 20%
- drainage time 12 h
- drainage temperature 35-32 °C
- pH at end of drainage: 4.3

Stopping drainage by closing bottom outlet.

### Step 9 - Mixing

Agitating at 60 rpm during 15 min
Temperature at end of mixing 32 °C
pH after mixing 4.3

### Step 10 - Smoothing and Packaging

Installing a smoothing filter, pumping the product out of the tank through the smoothing filter, and filling cups (100g) with a filling pump under the following conditions
- 1400 s⁻¹ shear rate with a filter
- output 90 kg - 200 cups sealing in 1 h
- product temperature: 30-32 °C
- filling time: 1.5 h
- pH at end of packaging: 4.3

### Step 11 - Storage

Allowing cooling to 10 °C.

### Tests

The product obtained has the following features

| | |
|---|---|
| Protein | 5.13% |
| fat | 6.56% |
| dry matter | 16.85% |
| viscosity d+1^{a)} | 1570 mPa.s |
| texture d+1^{a)} | 31 g |
| pH after 21 days | 4.3 |
| shelf live | 21 days |

| | |
|---|---|
| ^{a)} Measured after 24h storage. | |

It is further mentioned that all the cups showed a consistent fat content.

The viscosity is measured by applying a regular shearing strength increase using a rheometer with 2 co-axial cylinders. The rheometer is a RM 180 from METTLER. With these tools, the geometry 12 is used. The 64 s⁻¹ shearing is applied during 10 seconds on the product at 10 °C.

The texture is measured with a TAXT2 apparatus, with the following settings:
- Temperature:10 °C
- Plunger: Cylindrical plunger, 25 mm diameter, 35 mm long
- Value of triggering force: 0.5 g (0.005 N)
- Speed of descent plunger: 12 mm/min (0.2 mm/s)
- Penetration distance: 15 mm
   Macro: Yogurt (max. force at the end of the way/distance)
- Cup: diameter 68mm; height 82 mm

### Example 2

Example 1 is reproduced, except that for step 8), drainage is performed by applying overpressure (not only gravitation), during 12 hours, to have a drainage amount of 30%.

The product obtained has the following features:

| | |
|---|---|
| Protein | 6% |
| fat | 6.7% |
| dry mater | 18.7% |
| viscosity d+1^{a)} | 2500 mPa.s |
| texture d+1^{a)} | 50 g |
| pH after 21 days | 4.28 |
| shelf live | 21 days |

It is further mentioned that all the cups showed a consistent fat content.

### Example 3

Example 1 is reproduced, except that for the following:
- in step 2) to step 4), agitator speed is set to 60 rpm
- in step 5) mixing culture is done using 60 rpm for 30 min
- in step 7) dividing curd with agitator speed 60 rpm for 3 sec
- in step 8) whey removal is done using a modified dead end filter to reduce whey draining time to 8 h. The drainage amount (based on initial milk weight) is 30%. The filter characteristics are the following:
- Effective filter length: 37.000 cm
- Wide Screen:
   - Inner diameter D: 3.800 cm
   - Hole diameter Dₕ: 0.200 cm
   - Hole density: 9.000 holes/cm²
   - Area: 442 cm²
   - Void fraction: 28.3%
   - Hole surface : 0.03 cm²
   - Hydraulic diameter: 0.200 cm
   - Non-circularity coefficient: 1.000
- Wire Screen
   - Inner diameter D_{w}: 3.5 cm
   - wire thickness d: 0.006 cm
   - wire hole size w: 0.01 cm
   - Area: 406.84 cm²
   - Void fraction: 39.1%
   - Hole surface: 1*10⁻⁰⁴ cm²
   - Hydraulic diameter: 0.01 cm
   - Non-circularity coefficient: 0.890
   - Total void fraction: 11.0%
   - Crossing section: 44.93 cm²
- in step 9) agitation at 80 rpm for 15 min

The product obtained has the following features:

| | |
|---|---|
| Protein | 4.5% |
| fat | 5,9% |
| dry matter | 15.5% |
| viscosity d+1^{a)} | 1125 mPa.s |
| texture d+1^{a)} | 22.4 g |
| pH after 21 days | 4.30 |
| shelf live | 21 days |

It is further mentioned that all the cups showed a consistent fat content.

### Comparative Example 1

Example 1 is reproduced, except that for step 8) some agitation is maintained at 15 rpm. With this change substantially no whey filters off to white mass, and the product obtained has the following features:

| | |
|---|---|
| Protein | 3.56% |
| fat | 4.08% |
| viscosity d+1^{a)} | 350 mPa.s |
| texture d+1^{a)} | 17g |
| pH after 21 days | 4.3 |

The products obtained have a poor texture.

### Comparative Example 2

Example 3 is reproduced, except that for step 2) heating is done in conditions such that the product is at 110 °C for 5 min.

With this change substantially no clear whey filters off to white mass, whey drainage amount: 50% and the obtained product has the following features:

| | |
|---|---|
| Protein | 5.5 % |
| fat | 6.3 % |
| dry matter | 16.6 % |
| viscosity d+1^{a)} | 1400 mPa.s |
| texture d+1^{a)} | 28 g |
| pH after 21 days | 4.3 |

The products obtained have a brownish color and a caramel taste.

## Claims

1. A process of making a fermented dairy product comprising the following steps:
a) providing milk having a fat content of a least 1% by weight, preferably at least 3% by weight,
b) heating the milk at a temperature of from 80°C to 99°C, preferably 85 °C to 95 °C,
c) cooling the milk to a temperature of from 30 °C to 45 °C,
d) inoculating the milk with a starter comprising lactic acid bacteria,
e) allowing a fermentation at a temperature of from 30 °C to 45 °C, with a pH decrease to a breaking pH at which proteins coagulate to form a curd,
f) breaking and dividing the curd,
g) allowing separation of whey from the curd, and partially removing the whey to obtain a concentrated white mass,
h) mixing the white mass,
i) smoothing the white mass, and
j) conditioning and cooling to a temperature of from 1 °C to 10°C,
wherein steps a), b), c), d), e), f), g) and h) are performed in a same single tank.

2. A process according to claim 1, where agitation is performed during steps b), c) and h), and wherein agitation in steps b), c) and h), and breaking and dividing in step f) are performed with a same single agitator in rotation motion, moving at various rotational speeds.

3. A process according to any of the preceding claims, wherein no agitation is performed during steps e) and g).

4. A process according to any of the preceding claims, wherein step g) comprises allowing the whey to drain out of the curd, and filtering the whey off the curd.

5. A process according to claim 4, wherein filtering is performed by:
- passing the whey through a filter positioned at the bottom of the tank, by gravitation and/or by applying pressure, or
- passing the whey through a filter positioned at a side outlet of the tank, by applying pressure, or
- passing the whey though a filter moving downwardly.

6. A process according to claim 5, wherein filtering is performed by passing the whey through a filter positioned at the bottom of the tank, by gravitation and/or by applying pressure, and wherein:
- the filter is positioned at an outlet at the bottom of the tank, or
- the filter is positioned in the tank, fitting with the bottom of the tank.

7. A process according to any of the preceding claims, wherein from 10% to 30% of whey is removed, compared to the weight of milk provided in step a).

8. A process according to any of the preceding claims, wherein the milk is raw milk.

9. A process according to any of the preceding claims, wherein the milk is ultra-fresh milk.

10. A process according to any of the preceding claims, wherein the milk is warm milk.

11. A process according to any of the preceding claims, wherein the milk is pre-pasteurized milk.

12. A process according to any of the preceding claims, wherein conditioning is performed at a temperature of from 30 °C to 45 °C, and cooling is subsequent to conditioning.

13. A process according to any of the preceding claims, wherein the tank is a 200 L to 10000 L tank, preferably 500 L to 1500 L.

14. A process according to any of the preceding claims, being carried out with equipments fitted in a transportation container.

## Patentansprüche

1. Verfahren zur Herstellung eines fermentierten Milchprodukts umfassend die folgenden Schritte:
a) Bereitstellen von Milch mit einem Fettgehalt von mindestens 1 Gew.-%, vorzugsweise mindestens 3 Gew.-%,
b) Erhitzen der Milch auf eine Temperatur von zwischen 80°C und 99°C, vorzugsweise 85 °C und 95 °C,
c) Abkühlen der Milch auf eine Temperatur von zwischen 30 °C und 45 °C,
d) Impfen der Milch mit einem Starter umfassend Milchsäurebakterien,
e) Ermöglichen einer Fermentation bei einer Temperatur von zwischen 30 °C und 45 °C, mit einer pH-Erniedrigung bis zu einem Bruch-pH, bei dem die Proteine gerinnen, unter Bildung eines Bruchs,
f) Brechen und Zerteilen des Bruchs,
g) Ermöglichen der Abtrennung von Molke aus dem Bruch, und teilweises Entfernen der Molke unter Erhalt einer konzentrierten weißen Masse,
h) Mischen der weißen Masse,
i) geschmeidig machen der weißen Masse, und
j) Konditionieren und Kühlen auf eine Temperatur von zwischen 1 °C und 10 °C,
worin Schritte a), b), c), d), e), f), g) und h) in demselben einzigen Behälter durchgeführt werden.

2. Verfahren nach Anspruch 1, worin während der Schritte b), c) und h) gerührt wird und worin das Rühren in den Schritten b), c) und h) und das Brechen und Zerteilen in Schritt f) in demselben einzigen Rührer in Rotationsbewegung durchgeführt wird, wobei dieser mit verschiedenen Drehzahlen rührt.

3. Verfahren nach einem der vorhergehenden Ansprüche, worin während der Schritte e) und g) kein Rühren durchgeführt wird.

4. Verfahren nach einem der vorherigen Ansprüche, worin Schritt d) Ermöglichen des Ablaufens der Molke aus dem Bruch und das Abfiltrieren der Molke aus dem Bruch umfasst.

5. Verfahren nach Anspruch 4, worin Abfiltrieren durchgeführt wird durch:
- Passieren der Molke durch einen am Boden des Behälters positionierten Filter mittels Schwerkraft und/oder durch Anlegen von Druck, oder
- Passieren der Molke durch einen an einem Seitenauslass des Behälters positionierten Filter durch Anlegen von Druck, oder
- Passieren der Molke durch einen sich abwärts bewegenden Filter.

6. Verfahren nach Anspruch 5, worin Abfiltrieren durchgeführt wird durch Passieren der Molke durch einen am Boden des Behälters positionierten Filter mittels Schwerkraft und/oder durch Anlegen von Druck, und worin:
- der Filter an einem Auslass am Boden des Tanks positioniert ist, oder
- der Filter in dem Tank eingepasst in den Boden des Tanks positioniert ist.

7. Verfahren nach einem der vorhergehenden Ansprüche, worin 10% bis 30% der Molke bezogen auf das Gewicht der Milch, welche in Schritt a) bereitgestellt wurde, entfernt werden.

8. Verfahren nach einem der vorhergehenden Ansprüche, worin die Milch Rohmilch ist.

9. Verfahren nach einem der vorhergehenden Ansprüche, worin die Milch Ultrafrisch-Milch ist.

10. Verfahren nach einem der vorhergehenden Ansprüche, worin die Milch warme Milch ist.

11. Verfahren nach einem der vorhergehenden Ansprüche, worin die Milch vorpasteurisierte Milch ist.

12. Verfahren nach einem der vorhergehenden Ansprüche, worin Konditionieren bei einer Temperatur von zwischen 30 °C und 45 °C erfolgt und Abkühlen dem Konditionieren folgt.

13. Verfahren nach einem der vorhergehenden Ansprüche, worin der Behälter ein 200 Liter bis 10000 Liter Behälter, vorzugsweise 500 Liter bis 1500 Liter Behälter ist.

14. Verfahren nach einem der vorhergehenden Ansprüche, welches mit Ausrüstungsgegenständen durchgeführt wird, die in einen Transportbehälter montiert sind.

## Revendications

1. Procédé de fabrication d'un produit laitier fermenté comprenant les étapes suivantes :
a) la fourniture de lait ayant une teneur en matières grasses d'au moins 1 % en poids, de préférence d'au moins 3 % en poids,
b) le chauffage du lait à une température de 80 °C à 99 °C, de préférence de 85 °C à 95 °C,
c) le refroidissement du lait à une température de 30 °C à 45 °C,
d) l'inoculation du lait avec un ferment comprenant des bactéries d'acide lactique,
e) le fait de permettre une fermentation à une température de 30 °C à 45 °C, avec une réduction de pH jusqu'à un pH de rupture auquel les protéines coagulent pour former un lait caillé,
f) la rupture et la division du lait caillé,
g) le fait de permettre la séparation du petit-lait du lait caillé, et le retrait partiel du petit-lait pour obtenir une masse blanche concentrée,
h) le mélange de la masse blanche,
i) le lissage de la masse blanche, et
j) le conditionnement et le refroidissement à une température de 1 °C à 10 °C,
dans lequel les étapes a), b), c), d), e), f), g) et h) sont effectuées dans une seule et même cuve.

2. Procédé selon la revendication 1, dans lequel une agitation est effectuée pendant les étapes b), c) et h), et dans lequel une agitation dans les étapes b), c) et h) et une rupture et une division dans l'étape f) sont effectuées avec un seul et même agitateur dans un mouvement de rotation, se déplaçant à diverses vitesses de rotation.

3. Procédé selon l'une quelconque des revendications précédentes, dans lequel aucune agitation n'est effectuée pendant les étapes e) et g).

4. Procédé selon l'une quelconque des revendications précédentes, dans lequel l'étape g) comprend le fait de permettre au petit-lait de s'égoutter hors du lait caillé, et la filtration du petit-lait hors du lait caillé.

5. Procédé selon la revendication 4, dans lequel la filtration est effectuée par :
- passage du petit-lait à travers un filtre situé au fond de la cuve, par gravitation et/ou par application d'une pression, ou
- passage du petit-lait à travers un filtre situé au niveau d'une sortie latérale de la cuve, par application d'une pression, ou
- passage du petit-lait à travers un filtre se déplaçant vers le bas.

6. Procédé selon la revendication 5, dans lequel la filtration est effectuée par passage du petit-lait à travers un filtre situé au fond de la cuve, par gravitation et/ou par application d'une pression, et dans lequel :
- le filtre est situé au niveau d'une sortie au fond de la cuve, ou
- le filtre est situé dans la cuve, ajusté au fond de la cuve.

7. Procédé selon l'une quelconque des revendications précédentes, dans lequel de 10 % à 30 % du petit-lait sont retirés, par rapport au poids du lait fourni dans l'étape a).

8. Procédé selon l'une quelconque des revendications précédentes, dans lequel le lait est du lait cru.

9. Procédé selon l'une quelconque des revendications précédentes, dans lequel le lait est du lait ultra-frais.

10. Procédé selon l'une quelconque des revendications précédentes, dans lequel le lait est du lait tiède.

11. Procédé selon l'une quelconque des revendications précédentes, dans lequel le lait est du lait pré-pasteurisé.

12. Procédé selon l'une quelconque des revendications précédentes, dans lequel un conditionnement est effectué à une température de 30 °C à 45 °C, et le refroidissement fait suite au conditionnement.

13. Procédé selon l'une quelconque des revendications précédentes, dans lequel la cuve est une cuve de 200 1 à 10 000 1, de préférence de 500 1 à 1 5001.

14. Procédé selon l'une quelconque des revendications précédentes, réalisé avec des équipements ajustés dans un récipient de transport.
